**Europäisches Patentamt**

**European Patent Office**

**Office européen des brevets**

(19)

(11) Veröffentlichungsnummer: **0 048 924**
A1

(12) # EUROPÄISCHE PATENTANMELDUNG

(21) Anmeldenummer: **81107503.5**

(22) Anmeldetag: **21.09.81**

(51) Int. Cl.³: **H 04 M 9/02**

(30) Priorität: **25.09.80 DE 3036169**

(43) Veröffentlichungstag der Anmeldung: **07.04.82**
**Patentblatt 82/14**

(84) Benannte Vertragsstaaten: **AT BE IT NL**

(71) Anmelder: **SIEMENS AKTIENGESELLSCHAFT Berlin und München, Postfach 22 02 61, D-8000 München 22 (DE)**

(72) Erfinder: **Gebhart, Hartmut, Dipl.-Ing., Mitterweg 19a, D-8033 Krailling (DE)**
Erfinder: **Heberle, Wolfgang, Dipl.-Phys., Valleystrasse 40, D-8000 München 70 (DE)**
Erfinder: **Blossfeldt, Dieter, Dipl.-Ing., Hirsch-Gereuth-Strasse 31, D-8000 München 70 (DE)**

(54) **Anordnung für Fernsprechapparate in kleinen Fernsprechnebenstellenanlagen, in denen zwischen diesen und einer zentralen Einrichtung eine wechselseitige Übertragung von Digitalsignalen vorgenommen wird.**

(57) Anordnung für Fernsprechapparate in kleinen Fernsprechnebenstellenanlagen, in denen zwischen diesen und einer zentralen Einrichtung eine wechselseitige Übertragung von Digitalsignalen vorgenommen wird. Als Fernsprechapparat (TS1) wird ein normaler Großserienfernsprechapparat ohne Wahlzifferngeber verwendet. Der Fernsprechapparat wird durch einen speziellen Tastwahlblock (TB) komplettiert der über zwei zusätzliche Adern (c, d) die neben den üblichen a/b-Adern die jeweilige Teilnehmeranschlußleitung bilden, mit der zentralen Einrichtung (ZSt) verbunden ist. In diesem Tastwahlblock, der demnach in den für den normalerweise vorhandenen whalzifferngeber vorgesehenen Gehäuseausschnitt eingesetzt wird, sind die mit der digitalen Signalisierung in Zusammenhang stehenden Funktionseinheiten und Betätigungselemente räumlich zusammengefaßt. Er enthält also unter anderem die Empfangs- und Sendeeinheiten, die den Datenaustausch steuernde Steuereinheit sowie den Tastensatz, der zusätzliche Tasten für bestimmte Bedienungsprozeduren aufweist. Der spezielle Tastwahlblock kann auch noch die optischen Anzeigeelemente enthalten.

0048924

SIEMENS AKTIENGESELLSCHAFT
Berlin und München

Unser Zeichen
VPA
80 P 6153 E

Anordnung für Fernsprechapparate in kleinen Fernsprechnebenstellenanlagen, in denen zwischen diesen und einer zentralen Einrichtung eine wechselseitige Übertragung von Digitalsignalen vorgenommen wird.

Die Erfindung betrifft eine Anordnung für Fernsprechapparate in kleinen Fernsprechnebenstellenanlagen, die über jeweils aus einem Signaladernpaar und einem Sprechadernpaar bestehenden Teilnehmeranschlußleitung sternförmig mit einer zentralen Einrichtung verbunden sind und bei denen über das Signaladernpaar eine wechselseitige Übertragung von Digitalsignalen vorgenommen wird, wobei von den einzelnen Fernsprechapparaten zur zentralen Einrichtung die teilnehmerseitig durch eine Betätigung entsprechender Betätigungselemente eingegebenen und unter anderem für den Aufbau interner bzw. externer Verbindungen maßgebenden Informationen übermittelt werden und die in der dazu entgegengesetzten Richtung vorgenommene Übertragung zur Übermittlung von Informationen dient, durch die an jedem Fernsprechapparat für den Teilnehmer insbesondere optisch registrierbare Anzeigen gesteuert werden, die bestimmte Betriebszustände der Anlage bzw. der Gesprächsverbindung und/oder Belegungszustände der Verbindungsleitungen betreffen und in jedem Fernsprechapparat die Ansteuerung der Anzeigeelemente sowie die Steuerung des für den Empfang und das Aussenden der digitalen Informationen notwendigen Funktionsabläufe durch eine entsprechende Steuereinheit veranlaßt wird.

Man geht also von Fernsprechapparaten aus, die in kleinen Nebenstellenanlagen eingesetzt sind in denen voraussetzungsgemäß zwischen diesen Sprechapparaten und einer

Rs 1 Bo / 18.9.1980

ihnen gemeinsamen Einrichtung eine wechselseitig gerichtete Signalisierung stattfindet. Diese Signalisierung erfolgt über ein zusätzliches Signaladernpaar, das zusammen mit dem in üblicher Weise vorhandenen Sprechadernpaar die jeweilige Teilnehmeranschlußleitung bildet. Von den einzelnen Sprechapparaten werden in erster Linie zu der zentralen Einrichtung Informationen über die erfolgte Betätigung einzelner Tasten übermittelt. Neben den Wähltasten können weitere Tasten vorhanden sein, die bestimmte Bedienungsprozeduren ermöglichen bzw. durch deren Betätigung die Art der beabsichtigten Verbindung signalisiert werden kann. Es kann dadurch beispielsweise unterschieden werden, ob eine interne Verbindung zu einem anderen Sprechapparat der jeweiligen Nebenstellenanlage oder ob eine externe Verbindung zu einem Sprechapparat des öffentlichen Netzes bzw. zu einem Sprechapparat einer anderen Nebenstellenanlage hergestellt werden soll.

Von der gemeinsamen Einrichtung werden zu den Sprechapparaten in erster Linie Einstellinformationen für optische Anzeigeelemente übertragen, die an ihnen angebracht sind. Diese Anzeigeelemente können beispielsweise Leuchtdioden darstellen, durch deren Leuchtzustand dem Teilnehmer angezeigt werden kann ob die vorhandenen Externleitungen bzw. die Internleitungen belegt oder frei sind. Die Informationen für sämtliche, an einem Sprechapparat vorhandenen Anzeigeelemente können in einem Datenblock zusammengefaßt sein und als binäre Digitalsignale übertragen werden.

Es ist die Aufgabe der Erfindung, die mit dem geschilderten speziellen Einsatz des Fernsprechapparates verbundenen zusätzlichen Funktionen mit dem geringstmöglichen Zusatzaufwand zu realisieren.

Dies wird bei einer Anordnung der eingangs genannten Art dadurch erreicht, daß die mit der genannten wechselseitigen Übertragung von Digitalsignalen im jeweiligen Fernsprechapparat in Zusammenhang stehenden Funktionseinheiten im wesentlichen aus elektronischen Bauelementen bzw. Baueinheiten aufgebaut sind, deren Spannungsversorgung über das Signaladernpaar vorgenommen wird, das sämtliche Funktionseinheiten und die Betätigungselemente räumlich zu einer Baugruppe vereinigt sind und daß diese Baugruppe hinsichtlich ihrer Abmessungen so festgelegt ist, daß sie bei einem serienmäßig für Anlagen ohne Datenübertragung hergestellten Fernsprechapparat anstelle des normalerweise vorhandenen Wahlzifferngebers in den für diesen vorgesehenen Gehäuseausschnitt eingesetzt werden kann.

Für den Aufbau der einzelnen Funktionseinheiten, die aufgrund der vorgesehenen Datenübertragung in jedem Fernsprechapparat zusätzlich vorhanden sind, werden soweit als möglich elektronische Bauelemente bzw. Baueinheiten verwendet. Dadurch verringert sich der notwendige Raumbedarf für diese zusätzlichen Funktionseinheiten. Darüberhinaus werden diese Funktionseinheiten erfindungsgemäß derart mit dem notwendigen Tastensatz räumlich gekoppelt, daß die gesamte Baugruppe im Austausch gegen die bei einem serienmäßig hergestellten Fernsprechapparat vorhandene Tastatur angebracht werden kann. Es entsteht somit ein Fernsprechapparat, der ohne Änderungen seiner äußeren Form und Abmessungen für den geschilderten speziellen Einsatzfall als Fernsprechapparat besonderer Art verwendet werden kann.

Dies ist gegenüber der naheliegenden Lösungen, nämlich die zusätzlichen Funktionseinheiten in einem mit dem Fernsprechapparat gekoppelten Zusatzgerät unterzubringen oder das Gehäuse im Hinblick auf den speziellen Verwendungszweck völlig neu zu gestalten, äußerst vorteilhaft. Die erfindungsgemäß konzipierte Baugruppe besteht also neben den für die Wahl oder für die Abgabe anderer Steuer-

0048924

informationen vorhandenen Betätigungselementen aus den für den Datenaustausch notwendigen Empfangs- und Sendeeinheiten sowie einer deren Funktionen steuernden Steuereinheit. Diese Steuereinheit kann eine taktgebende Einheit sowie einen Mikroprozessor enthalten. Es können weiterhin Einheiten vorhanden sein, durch die Stromaufnahme einzelner Funktionseinheiten regelbar ist.

Gemäß einer Weiterbildung der Erfindung können die der genannten optischen Anzeige dienenden Elemente in der Baugruppe integriert sein. Diese Anzeigeelemente sind beispielsweise in Form der sogenannten Leuchtdioden als diskrete Bauelemente vorhanden oder sie können mit einzelnen Tasten, die die Betätigungselemente darstellen, eine bauliche Einheit bilden.

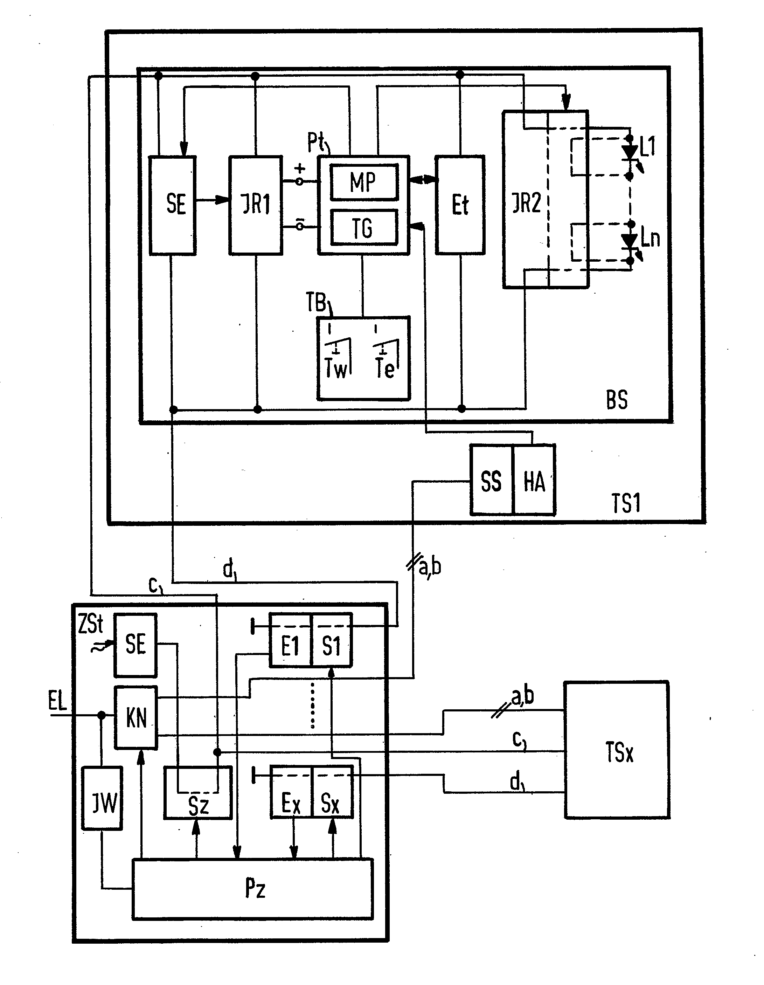

Das in der Zeichnung dargestellte Ausführungsbeispiel dient zur Veranschaulichung der Erfindung. Es ist die Grundstruktur einer kleinen Fernsprechnebenstellanlage gezeigt, bei der zwischen der zentralen Einrichtung ZSt und den einzelnen Fernsprechapparaten TS eine wechselseitige Signalisierung stattfindet. Die einzelnen Sprechapparate TS1 bis TSx sind sternförmig über eine jeweils vieradrige Teilnehmeranschlußleitung mit der ihnen gemeinsamen Einrichtung ZSt verbunden. Jede Teilnehmeranschlußleitung besteht aus dem Sprechadernpaar a, b und dem Signaladernpaar c, d. Über das jeweilige Sprechadernpaar werden die Sprachinformationen und der Rufstrom übertragen. Das Signaladernpaar dient dem wechselseitigen Datenaustausch. Gleichzeitig werden darüber die für diesen Datenaustausch in jeden Fernsprechapparat vorhandenen Funktionseinheiten gespeist.

An die zu jedem Sprechapparat führenden Sprechadern, die symbolisch jeweils nur durch eine einzige Leitungsader dargestellt sind, ist die Sprechschaltung SS angeschlossen. Sie dient in Verbindung mit dem Handapparat HA der Verarbeitung der übertragenen Sprachinformationen und bildet einen Leitungsabschluß. Zwischen den einzelnen Sprechapparaten TS sind interne Verbindungen herstellbar und es besteht weiterhin die Möglichkeit, sich auf eine von mehreren externen Leitungen EL aufzuschalten. Diese können zum öffentlichen Fernsprechnetz oder zu einer anderen Nebenstellenanlage führen. Die Art der gewünschten Verbindung kann beispielsweise durch die Betätigung einer hierfür am Fernsprechapparat vorgesehenen Taste signalisiert werden. Für den Sprechapparat TS1 ist durch den Tastenblock TB die Möglichkeit angedeutet, durch die Betätigung von Tasten das Aussenden bestimmter Informationen zu veranlassen. Durch die Taste Tw soll das Vorhandensein einer normalen Wahltastatur angedeutet werden. Die Taste Te steht für eine Reihe von Tasten, durch die bestimmte Bedienungsprozeduren eingeleitet werden können. Ist der Aufbau einer Externverbindung beabsichtigt, so wird die entsprechende Information von der zentralen Einrichtung aufgenommen. Die nachfolgende Betätigung einer der zur Wahltastatur gehörenden Tasten veranlaßt dann die in der zentralen Einrichtung vorhandene Steuereinheit Pz zur Ausgabe der zugeordneten Wahlinformationen. Dies kann auf der hierzu ausgewählten Externleitung durch normale Wahlimpulsgabe mittels Schleifenunterbrechung mit Hilfe der Einheit IW erfolgen. Die hierzu notwendigen Steuerinformationen liefert die Steuereinheit Pz, durch die weiterhin die Einstellbefehle für die Koppelanordnung KN abgegeben werden. Durch diese Koppelanordnung wird dann bei entsprechender Betätigung ihrer Koppelpunkte die wirksame Verbindungsdurchschaltung ermöglicht.

Während von den einzelnen Sprechapparaten nur bei einer vorgenommenen Tastenbetätigung bzw. durch das Abheben des Handapparates eine aktive Signalisierung zu der zentralen Einrichtung bewirkt wird, ist eine derartige Signalisierung in der Gegenrichtung, also von der zentralen Ein-

0048924

richtung zu den Sprechapparaten wesentlich häufiger vorzunehmen. Die von der zentralen Einrichtung ausgesendeten Informationen betreffen in erster Linie Einstellinformationen für optische Anzeigeelemente. Diese optischen Anzeigeelemente sind für den Fernsprechapparat TS1 als Leuchtdioden L1 bis Ln dargestellt. Durch sie kann beispielsweise der Belegtzustand der einzelnen Externleitungen oder der Belegtzustand der Internleitungen angezeigt werden. Die entsprechenden Steuerinformationen werden als binäre Digitalsignale an die jeweilige Signalleitung angelegt, wobei die Binärwerte durch Modulation der Signalleitungsspannung gebildet werden können. Der beispielsweise einem "log1"-Bit entsprechende aktive Binärwert kann beispielsweise durch eine bestimmte Absenkung der Signaladernspannung gebildet werden. Der einem "log0"-Bit entsprechende Binärwert kann durch den Spannungsruhewert der betreffenden Signalleitung charakterisiert sein. In kleinen Fernsprechnebenstellenanlagen müssen in den meisten Fällen zu den einzelnen Sprechapparaten dieselben Informationen übertragen werden. Dies kann durch eine gemeinsame Sendeschaltung Sz, die von der in der zentralen Einrichtung ZSt angeordneten Steuereinheit Pz gesteuert wird, bewirkt werden. Diese Sendeschaltung ist ausgangsseitig im Vielfach mit jeweils einer Ader, z.B. der c-Ader eines jeden Signalleitungspaares verbunden. Das der auszusendenden Information innerhalb eines gebildeten Datenblockes entsprechende Bitmuster wird durch einen damit übereinstimmenden Sendetakt von der Steuereinheit Pz an diese Sendeschaltung abgegeben. Sie bewirkt dann die entsprechende Modulation der Signalleitungsspannung. Die Signalleitungsruhespannung wird in gleicher Weise wie die an die Sprechadern zur Mikrofonspeisung anzuschaltende Versorgungsspannung von der Baueinheit SE geliefert. Diese Einheit kann beispielsweise einen von der Netzspannung gespeisten Stromwandler darstellen.

0048924

Sollen die einzelnen Fernsprechapparate unterschiedliche Informationen erhalten, so kann dies bei Anwendung der gemeinsamen Sendeschaltung Sz durch eine einfache Selektionsschaltung S1 bis Sx, die demnach in der zentralen Einrichtung pro Fernsprechapparat vorhanden ist, erfolgen. Durch diese kann in dem durch die gemeinsame Sendeschaltung ausgesendeten Datenblock ein zusätzliches Informationsbit an einer fest vorgegebenen Stelle eingefügt werden. Dies kann beispielsweise durch eine Spannungssenkung auf der d-Ader erfolgen, die zu dem Fernsprechapparat führt, der die Information erhalten soll. Dadurch wird die im jeweiligen Datenblock enthaltene Gesamtinformation nur von der in diesem zugeordneten Fernsprechapparat diesbezüglich vorhandenen Auswerteschaltung ausgewertet.

Für den Fernsprechapparat TS1 sind beispielhaft die mit der vorgenommenen Signalisierung in Zusammenhang stehende Einheiten sowie die optischen Anzeigeelemente in einer Baugruppe BS vereinigt. Für die übrigen Fernsprechapparate gilt dann entsprechendes. Diese Funktionseinheiten werden mit geringstmöglichem Schaltungsaufwand aufgebaut. Es werden soweit dies möglich ist elektronische Bauelemente bzw. Baueinheiten hierfür verwendet. Die einzelnen Funktionseinheiten sind im Hinblick auf die räumliche Abmessung derart zu dieser Baugruppe zusammengefaßt, daß sie in dem Gehäuseausschnitt, der in einem normalen Großserienfernsprechapparat für die Aufnahme der Wahltastatur vorgesehen ist, eingefügt werden kann. Zur Auswertung der an den Signaladern auftretenden Spannungsänderungen dient die Empfangsschaltung Et. Sie setzt das von der zentralen Einrichtung durch Modulation der Leitungsspannung ausgesendete Bitmuster in eine entsprechende Impulsreihe um und leitet diese an die Steuereinheit Pt weiter. Diese erkennt die darin enthaltene Information und liefert beispielsweise die Ansteuerbefehle für die Leuchtdioden L1 bis Ln. Diese Leuchtdioden können über die Reglerschaltung IR2 versorgt werden. Diejénigen Leuchtdioden, die beispielsweise ausgeschaltet sein sollen können durch einen von der Steuereinheit Pt entsprechend beeinflußten elektronischen Schalter wirksam überbrückt sein.

Die vom Fernsprechapparat abzusetzenden Informationen werden durch Modulation des auf der Signalleitung fliessenden Stromes übermittelt. Die Binärwerte der zu übertragenden digitalen Informationen werden durch eine Stromabsenkung, die einem     "log1"-Bit entsprechen kann und durch den Ruhestromwert der Signalleitung, der dann den "log0"-Bit entspricht, gebildet. Diese Informationen können für sich in einem Datenblock zusammengefaßt sein, wobei dann abwechselnd ein Datenblock zu der zentralen Einrichtung und von dieser zu dem jeweiligen Fernsprechapparat übertragen wird. Sie können auch innerhalb eines zu bildenden Datenblockes bitweise mit den von der zentralen Einrichtung ausgesendeten Informationen verschachtelt werden. Die Betätigung einer der Tasten des Tastensatzes oder das Abheben des Handapparates wird durch die Steuereinheit Pt registriert. Diese Steuereinheit enthält neben der taktgebenden Einheit TG einen Mikroprozessor MP. Das Aussenden der durch Strommodulation gebildeten Informationen erfolgt durch eine Sendeeinheit S, die ihrerseits von der Steuereinheit Pt gesteuert wird. Sie kann im wesentlichen aus einem elektronischen Schalter bestehen, durch den beispielsweise die Abschaltung der Reglereinheit IR1 vorgenommen wird. Diese Reglereinheit dient im Ausführungsbeispiel zur Versorgung der Steuereinheit Pt. Während der Zeit, in der die Reglereinheit IR abgeschaltet wird, kann diese Versorgung durch ein ihr enthaltenes Speicherelement aufrecht erhalten werden. Mit der Abschaltung der Reglereinheit wird der auf den Signaladern fließende Strom um den ansonsten von dieser Reglereinheit aufgenommenen Stromwert abgesenkt. Mit der vorgenommenen Stromabsen-

0048924

kung kann somit innerhalb eines jeden Datenblockes ein entsprechendes Informations-Bit zu der zentralen Einrichtung gesendet werden.

Die von dem Sprechapparat in der geschilderten Weise abgegebenen digitalen Informationen werden durch eine, jeweils mit einer Ader einer jeden Signalleitung gekoppelten Empfangsschaltung E1 bis Ex in der zentralen Einrichtung registriert und der Steuereinheit Pz übergeben. Diese leitet dann die daran anzuknüpfenden Folgefunktionen ein.

3 Patentansprüche
1 Figur

0048924

Patentansprüche

1. Anordnung für Fernsprechapparate in kleinen Fernsprechnebenstellenanlagen, die über jeweils aus einem Signaladernpaar und einem Sprechadernpaar bestehenden Teilnehmeranschlußleitung sternförmig mit einer zentralen Einrichtung verbunden sind und bei denen über das Signaladernpaar eine wechselseitige Übertragung von Digitalsignalen vorgenommen wird, wobei von den einzelnen Fernsprechapparaten zur zentralen Einrichtung die teilnehmerseitig durch eine Betätigung entsprechender Betätigungselemente eingegebenen und unter anderem für den Aufbau interner bzw. externer Verbindungen maßgebenden Informationen übermittelt werden und die in der dazu entgegengesetzten Richtung vorgenommene Übertragung zur Übermittlung von Informationen dient, durch die an jedem Fernsprechapparat für den Teilnehmer insbesondere optisch registrierbare Anzeigen gesteuert werden, die bestimmte Betriebszustände der Anlage bzw. der Gesprächsverbindung und/oder Belegungszustände der Verbindungsleitungen betreffen und in jedem Fernsprechapparat die Ansteuerung der Anzeigeelemente sowie die Steuerung des für den Empfang und das Aussenden der digitalen Informationen notwendigen Funktionsabläufe durch eine ent-sprechende Steuereinheit veranlaßt wird, d a d u r c h g e k e n n z e i c h n e t , daß die mit der genannten wechselseitigen Übertragung von Digitalsignalen im jeweiligen Fernsprechapparat (TS1) in Zusammenhang stehenden Funktionseinheiten (S, IR1, IR2, Pt, Et) im wesentlichen aus elektronischen Bauelementen bzw. Baueinheiten aufgebaut sind, deren Spannungsversorgung über das Signaladernpaar (c,d) vorgenommen wird, daß sämtliche Funktionseinheiten und die Betätigungselemente (TB) räumlich zu einer Baugruppe (BS) vereinigt sind und daß diese Baugruppe hinsichtlich ihrer Abmessungen so festgelegt ist, daß sie bei einem serienmäßig für Anlagen ohne Datenübertragung hergestellten Fernsprechapparat anstelle

des normaler Weise vorhandenen Wahlzifferngebers in den für diesen vorgesehenen Gehäuseausschnitt eingesetzt werden kann.

2. Schaltungsanordnung nach Anspruch 1, d a d u r c h g e k e n n z e i c h n e t , daß die der genannten Anzeige dienenden Elemente (L1 bis Ln) in der Baugruppe (BS) enthalten sind.

3. Schaltungsanordnung nach Anspruch 1 oder 2, d a - d u r c h g e k e n n z e i c h n e t , daß als Fernsprechapparat ein mit zusätzlichen Leistungsmerkmalen (z.B. Lauthören, Freisprechen) ausgestatteter Fernsprechapparat anwendbar ist.

1/1

0048924

Europäisches
Patentamt

**EUROPÄISCHER RECHERCHENBERICHT**

0048924

Nummer der Anmeldung

EP 81 10 7503

| | | **EINSCHLÄGIGE DOKUMENTE** | | KLASSIFIKATION DER ANMELDUNG (Int. Cl.3) |
|---|---|---|---|---|
| Kategorie | Kennzeichnung des Dokuments mit Angabe, soweit erforderlich, der maßgeblichen Teile | | betrifft Anspruch | |
| | SYSTEMS TECHNOLOGY, Nr. 28, April 1978, Seiten 7-13 Liverpool, G.B. J.C.H. DAVIS: "The K1 PABX" <br><br> * Seite 7, rechte Spalte, Zeilen 1-11; Seite 8, linke Spalte, Zeile 27 - rechte Spalte, Zeile 28; Seite 12, rechte Spalte, Zeile 1 - Seite 13, rechte Spalte, Zeile 14 * <br><br> -- | | 1 | H 04 M 9/02 |
| | INTERNATIONAL CONFERENCE ON PRIVATE ELECTRONIC SWITCHING SYSTEMS, 10th-12th April 1978, Seiten 64-69 London, G.B. J. SIDWELL: "K1 - A small stored program controlled PABX" <br><br> * Seite 64, rechte Spalte, Zeilen 2-18; Seite 65, linke Spalte, Zeilen 7-25 * <br><br> -- | | 1 | RECHERCHIERTE SACHGEBIETE (Int. Cl.3) <br><br> H 04 M 9/00 <br> 9/02 |
| | ERICSSON REVIEW, Band 56, Nr. 3, 1977, Seiten 124-129 Stockholm, SE. A. BOERYD et al.: "New telephone set" <br><br> * Seite 124, linke Spalte, Zeilen 1-11; rechte Spalte, Zeilen 18-22; Seite 127, rechte Spalte, Zeile 15 - Seite 128, linke Spalte, Zeile 15; Seite 129, linke Spalte, Zeilen 8-28; rechte Spalte, Zeilen 43-45 * <br><br> -- | | 1-3 | |
| | ERICSSON REVIEW, Band 57, Nr. 2, 1980, Seiten 38-45 Stockholm, SE. L. BRANDEN et al.: "Standard tele- | | 1 | KATEGORIE DER GENANNTEN DOKUMENTE <br><br> X: von besonderer Bedeutung <br> A: technologischer Hintergrund <br> O: nichtschriftliche Offenbarung <br> P: Zwischenliteratur <br> T: der Erfindung zugrunde liegende Theorien oder Grundsätze <br> E: kollidierende Anmeldung <br> D: in der Anmeldung angeführtes Dokument <br> L: aus andern Gründen angeführtes Dokument |

./.

Der vorliegende Recherchenbericht wurde für alle Patentansprüche erstellt.

&: Mitglied der gleichen Patentfamilie, übereinstimmendes Dokument

| Recherchenort | Abschlußdatum der Recherche | Prüfer |
|---|---|---|
| Den Haag | 07-12-1981 | VANDEVENNE |

EPA form 1503.1 06.78

| | **EINSCHLÄGIGE DOKUMENTE** | | KLASSIFIKATION DER ANMELDUNG (Int. Cl.³) |
|---|---|---|---|
| Kategorie | Kennzeichnung des Dokuments mit Angabe, soweit erforderlich, der Maßgeblichen Teile | betrifft Anspruch | |
| | phone set, DIAVOX 100" <br><br> * Seite 40, linke Spalte, Zeilen 8-13; Figuren 4,10 * <br><br> --- | | |
| P | US - A - 4 236 049 (TANIHATA) (25-11-1980) <br><br> * Spalte 1, Zeilen 37-59; Spalte 5, Zeilen 24-37 * <br><br> & JP - A - 54 89506 <br><br> --- | 1,3 | |
| | | | **RECHERCHIERTE SACHGEBIETE (Int. Cl.³)** |

EPA Form 1503.2  06.78